# EUROPÄISCHE PATENTANMELDUNG

(11) **EP 2 591 651 A1**
(43) Veröffentlichungstag der Anmeldung: **15.05.2013**
(21) Anmeldenummer: 12007033.9
(22) Anmeldetag: 11.10.2012
(51) Int. Cl.: A01B 63/14

(54) **Gezogenes Bodenbearbeitungsgerät**

(30) Priorität: 08.11.2011 DE 202011107598 U
(71) Anmelder: Kerner Maschinenbau GmbH, 89344 Aislingen (DE)
(72) Erfinder: Maucher, Christian, 86513 Ursberg-Mindelzell (DE)
(74) Vertreter: Gallo, Wolfgang

(57) **Zusammenfassung**

Gezogenes Bodenbearbeitungsgerät mit einem Rahmen (1) und einem daran angeordneten höhenverstellbaren Fahrwerk (2) sowie mit vorderen Stützrädern (3) und einer Deichsel (4) zum Anhängen an einen Traktor, die um eine Querachse schwenkbar am Rahmen angelenkt ist, weiter mit einer Mehrzahl von am Rahmen (1) angeordneten Bodenbearbeitungswerkzeugen wie Grubberzinken (5), Einebnungsorganen (6) und Walzenelementen (7), und mit einer zwischen der Deichsel (4) und dem Rahmen (1) angeordneten hydraulischen Kolben-Zylinder-Anordnung (8), die mit einem Hydraulikdruck beaufschlagbar ist, um eine die Deichsel (4) mit Bezug auf den Rahmen (1) abwärts drückende Kraft auf die Deichsel auszuüben, wobei eine Regeleinrichtung (11) den Hydraulikdruck in der Kolben-Zylinder-Anordnung (8) und damit die von dieser auf die Deichsel (4) ausgeübte Kraft im wesentlichen konstant hält.

## Beschreibung

Die Erfindung betrifft ein gezogenes Bodenbearbeitungsgerät mit größerer Baulänge.

Ein solches gezogenes Bodenbearbeitungsgerät weist eine Zugdeichsel zum Anhängen an einen Traktor, ein Fahrwerk und Bodenbearbeitungsorgane auf, die beispielsweise eine gestaffelte Anordnung von Grubberzinken vorderhalb des Fahrwerks und eine Anordnung von Einebnungselementen und Walzenelementen umfassen kann, die hinterhalb des Fahrwerks angeordnet sind. Die Fahrwerksräder sind höhenverstellbar.

Ein solches, in Firmenprospekten der Anmelderin vorveröffentlichtes Bodenbearbeitungsgerät dieser Art hat eine um eine horizontale Achse schwenkbar am Rahmen des Bodenbearbeitungsgeräts angeordnete Zugdeichsel, eine an drei hintereinander angeordneten Querbalken des Rahmens gestaffelt angeordnete Anordnung von Grubberzinken mit Flügelscharen, hydraulisch höhenverstellbare Fahrwerksräder hinterhalb der Grubberzinkenanordnung, und auf die Fahrwerksräder folgend eine Anordnung von Sternradverteilern und eine hinterhalb dieser angeordnete Walzenanordnung. Die Grubberzinken dienen zum Lockern des Bodens, wobei die Tiefe der Bodenbearbeitung durch die Höheneinstellung der Fahrwerksräder wählbar ist, und die Sternradverteiler dienen der Einebnung des gelockerten Bodens, und die darauf folgenden Walzenelemente bewirken eine feinkrümelige Verfeinerung der Bodeneinebnung und eine Rückverfestigung des Bodens. Die Höhenverstellbarkeit der Fahrwerksräder dient auch der Anhebung der Bodenbearbeitungsorgane beim Fahren des Bodenbearbeitungsgeräts auf Straßen und Wegen.

Das bekannte Bodenbearbeitungsgerät hat außerdem an seinem vorderen Bereich vorderhalb der Grubberzinkenanordnung zwei höhenverstellbar angeordnete Stützräder. Außerdem ist zwischen Deichsel und Rahmen eine hydraulische Kolben-Zylinder-Anordnung vorgesehen, die zwischen einer Stelle im Verlauf der Deichsellänge an der Deichsel und an einer erhöhten Stelle am vorderen Endbereich des Rahmens angeordnet ist. Damit kann zwischen dem Rahmen und der Deichsel ein Druck ausgeübt werden, der die Deichsel relativ zum Rahmen nach unten drückt. Auf diese Weise kann ein bestimmter fester Winkel zwischen Deichsel und Rahmen eingestellt werden, um damit wiederum die Eindringtiefe der Grubberzinken in den Boden zu wählen.

Probleme treten bei dem bekannten Bodenbearbeitungsgerät und bei anderen bekannten Bodenbearbeitungsgeräten ähnlicher Kategorie aufgrund von Geländeunebenheiten bei zu bearbeitenden Äckern auf, und zwar sowohl beim Passieren von Bodensenken als auch beim Passieren von Bodenkuppen.

Das bei einer Senke auftretende Problem verdeutlicht die Fig. A, und das bei einer Kuppe auftretende Problem verdeutlicht die Fig. B. Die Stützlast der Deichsel auf die Kupplung des Traktors ist jeweils durch einen Pfeil SL angedeutet.

Bei einer Kuppe hebt der vordere Bereich des Bodenbearbeitungsgeräts vom Boden ab. Die Grubberzinken greifen weniger tief in den Boden ein oder heben, wie in Fig. A gezeigt, gänzlich vom Boden ab. Der Boden wird in diesem Bereich nicht bearbeitet. Bei einer Kuppe hingegen tendieren die Grubberzinken dazu, tiefer in den Boden einzudringen. Die vorderen Stützräder werden in den Boden gedrückt oder, wie Fig. B zeigt, der Traktor wird mit den Hinterrädern angehoben. Damit verliert der Traktor mit den Antriebsrädern an Bodenhaftung, und ein Ziehen des Bodenbearbeitungsgeräts wird nicht mehr möglich.

Aufgabe der Erfindung ist es, diesen beim Durchfahren von Senken und Kuppen auftretenden Problemen abzuhelfen.

Diese Aufgabe wird gemäß der Erfindung durch die im Anspruch 1 angegebene Anordnung gelöst. Vorteilhafte Ausgestaltungen der Erfindung sind Gegenstand der Unteransprüche.

Gemäß der Erfindung wird die starre Einstellung zwischen Rahmen und Deichsel bei dem bekannten Bodenbearbeitungsgerät mit fest vorgegebenem Einstelldruck in der Kolben-Zylinder-Anordnung zwischen Deichsel und Rahmen ersetzt durch einen variablen geregelten Druck in der Kolben-Zylinder-Anordnung, und damit wird die starre Winkeleinstellung zwischen Deichsel und Rahmen ersetzt durch eine variable geregelte Winkeleinstellung, die sich den Situationen des Bodenverlaufs beim Durchfahren von Senken und Überfahren von Kuppen anpasst.

Die Wirkung dieser Druckregelung für das Durchfahren einer Senke wird durch Fig. C verdeutlicht, und für das Überfahren einer Kuppe durch Fig. D verdeutlicht.

Beim Durchfahren einer Senke wird, wie ein Vergleich der Fig. C mit Fig. A zeigt, die Deichsel relativ zum Rahmen angehoben, die Anordnung also gestreckt, so dass der vordere Bereich des Bodenbearbeitungsgeräts in seiner gewünschten Position am Boden verbleibt und nicht abgehoben wird, und die Grubberzinken in der vorgesehenen Arbeitstiefe in den Boden eingreifen. Beim Überfahren einer Kuppe wird, wie Fig. D im Vergleich zu Fig. B zeigt, die Deichsel relativ zum Rahmen abgesenkt, so dass der Traktor mit seinen Hinterrädern unverändert auf dem Boden bleibt und die Grubberzinken in der vorgesehenen Arbeitstiefe in den Boden eingreifen. Die Stützlast SL wird stets im wesentlichen konstant gehalten.

Diese Regelung des Drucks in der Kolben-Zylinder-Anordnung zwischen Deichsel und Rahmen erfolgt also dadurch, dass der Druck beim Durchfahren einer Senke abgesenkt und beim Überfahren einer Kuppe vergrößert wird.

Die praktische Realisierung einer solchen Druckregelung in der Kolben-Zylinder-Anordnung ist auf verschiedenartige Weise möglich.

Dazu kann eine Druckregeleinrichtung Anwendung finden, die mit einem Drucksensor arbeitet, der die Stützkraft der Stützräder erfasst oder der im Bereich der Kupplung zwischen dem Traktor und dem Bodenbearbeitungsgerät die Stützlast erfasst, welche die Deichsel auf den Kupplungskopf des Traktors ausübt. Die Stützkraft der Stützräder vermindert sich beim Durchfahren einer Senke und erhöht sich beim Überfahren einer Kuppe, und bei der Stützlast, welche die Deichsel auf den Kupplungskopf des Traktors ausübt, ist es umgekehrt; diese erhöht sich beim Durchfahren einer Senke und vermindert sich beim

Überfahren einer Kuppe. In Abhängigkeit davon kann dann der Druck in der Kolben-Zylinder-Anordnung entsprechend erhöht oder vermindert werden.

Solche Drucksensoren können elektrische, hydraulische oder pneumatische Sensoren sein, und die Regeleinrichtung kann ein elektrischer Sensorsignal in eine entsprechende Hydraulikventilbetätigung umsetzen, oder bei einem hydraulischen oder pneumatischen Sensor kann der Druck als Steuerdruck direkt der Regeleinrichtung zugeführt werden. Solche Drucksensoren können irgendwo in der Stützradaufhängung oder zwischen Stützrad und Rahmen sowie am Kupplungskopf des Traktors oder dem Kupplungselement der Deichsel angeordnet sein.

Möglich wäre auch die Verwendung von Neigungssensoren am Rahmen des Bodenbearbeitungsgeräts und am Traktor. Mit solchen Neigungssensoren müsste dann die Differenz zwischen der Neigung des Traktors und dem Bodenbearbeitungsgerät erfasst werden, um den Druck zu steuern, denn ein Absolutwert ist im Hinblick darauf, dass ein zu bearbeitender Acker ansteigend oder abfallend verlaufen kann, nicht ausreichend.

Nach einer bevorzugten Ausführungsform der Erfindung findet eine Druckregeleinrichtung Anwendung, bei welcher ein als Spindelventil ausgebildetes Schieberventil vorgesehen ist, das den Zylinderraum der Kolben-Zylinder-Anordnung mit einer Druckzuleitung und einer Druckableitung verbindet. Die Ventilspindel ist dabei über eine einstellbare Druckfeder von einem einstellbaren, auf das eine axiale Ende wirkenden Einstelldruck beaufschlagt, und an ihrem entgegen gesetzten axialen Ende durch den Ist-Druck in der Leitung zwischen dem Spindelventil und der Zylinderkammer. Beim Durchfahren einer Senke erhöht sich der Druck in der Kolbenkammer, weil die Deichsel sich anzuheben sucht, und dieser erhöhte Ist-Druck schiebt dann das Spindelventil entgegen dem voreingestellten Federdruck in eine eine Druckabsenkung bewirkende Richtung. Beim Überfahren einer Kuppe sinkt der Druck in der Zylinderkammer ab, weil die Deichsel sich abzusenken sucht, so dass der Federdruck das Spindelventil gegen den verminderten Ist-Druck in der Zylinderkammer in eine eine Druckerhöhung bewirkende Position verschoben wird.

Ein Ausführungsbeispiel der Erfindung wird nachstehend unter Bezugnahme auf die anliegenden Zeichnungsfiguren 1 und 2 noch weiter erläutert. Darin zeigen
- Fig. 1: eine Seitenansicht des Bodenbearbeitungsgeräts nach der Erfindung, und
- Fig. 2: ein schematisches Blockschaltbild der Regelung.

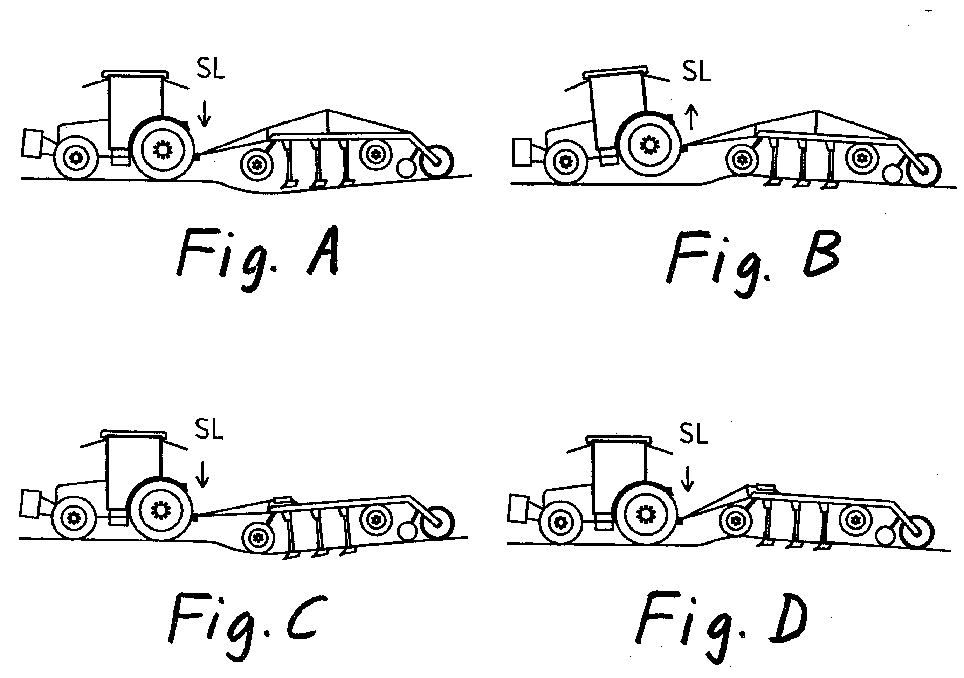

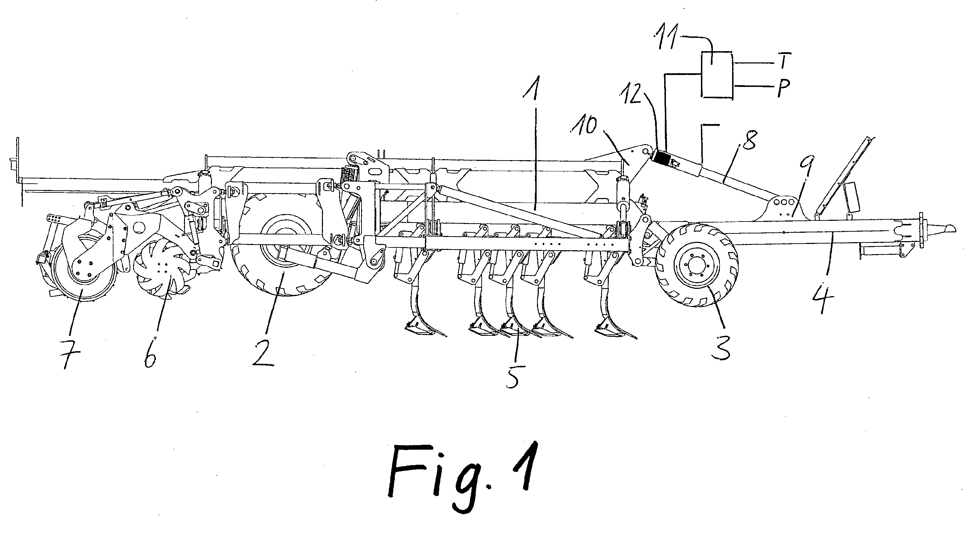

Fig. 1 zeigt in Seitenansicht ein gezogenes Bodenbearbeitungsgerät mit einem Rahmen 1, einem höhenverstellbaren Fahrwerk 2, vorderen Stützrädern 3, und einer Deichsel 4 zum Anhängen an einen Traktor.

Am Rahmen 1 sind Bodenbearbeitungswerkzeuge, beispielsweise Grubberzinken 5, Sternradverteiler 6, oder andere Einebnungsorgane, und Walzenelemente 7 angeordnet.

Die Deichsel 4 ist am vorderen Ende des Rahmens 1 um eine Querachse schwenkbar, also höhenbeweglich, angelenkt. Zwischen der Deichsel 4 und dem Rahmen ist eine Kolben-Zylinder-Anordnung 8 angeordnet, die an einer im Verlauf der Deichsellänge gelegenen Stelle 9 an der Deichsel angelenkt ist, und an einer erhöhten Stelle 10 am vorderen Bereich des Rahmens am Rahmen angelenkt ist. Mit der Kolben-Zylinder-Anordnung 8 ist also ein hydraulischer Druck zwischen dem Rahmen 1 und der Deichsel 4 erzeugbar, der die Deichsel 4 abwärts zu drücken sucht, und den zwischen dem Rahmen 1 und der Deichsel 4 gebildeten Winkel beeinflusst.

Die Lastverhältnisse im Betrieb des Bodenbearbeitungsgeräts können wie folgt dargestellt werden:

Zu dem Gewicht des Bodenbearbeitungsgeräts addiert sich noch eine dieses etwas nach unten ziehende Kraft durch den Eingriff der Grubberzinken 5 im Boden. Diese Gesamtkraft verteilt sich auf eine Teilkraft, die über das Fahrwerk 2 und die dahinter befindlichen, teilweise in den Boden eindringenden Bodenbearbeitungswerkzeuge, nämlich die Sternradverteiler 6 und die Walzenelemente 7, auf den Boden wirkt, weiter in eine Teilkraft, die über die vorderen Stützräder 3 auf den Boden wirkt, und in eine Teilkraft, die über den Deichselkupplungskopf auf den Kupplungskopf des Traktors wirkt. Die Kräfteverteilung auf die Stützräder 3 und den Deichselkopf verändert sich, wie oben schon beschrieben, beim Durchfahren von Senken und Überfahren von Kuppen. Beim Durchfahren von Senken (s. Fig. A) erhöht sich der Kräfteanteil auf den Deichselkopf und vermindert sich der Kräfteanteil auf die Stützräder; beim Überfahren einer Kuppe vergrößert sich der Kräfteanteil auf die Stützräder und vermindert sich der Kräfteanteil auf den Deichselkopf (s. Fig. B).

Um die Kraftverteilung auf die vorderen Stützräder 3 und den Deichselkopf unabhängig vom Durchfahren von Senken und Überfahren von Kuppen im wesentlichen konstant zu halten, ist eine Regeleinrichtung 11 vorgesehen, die den Druck im Zylinderraum der Kolben-Zylinder-Anordnung 8 regelt. Diese ist in Fig. 1 schematisch angedeutet. Ebenfalls sind deren Verbindungen zur Hydraulikpumpe P und zum Hydrauliktank T schematisch angedeutet. Es versteht sich, dass diese Regeleinrichtung nur ein Teil der Gesamthydraulikanlage für das Bodenbearbeitungsgerät ist, aber die sonstigen Hydraulikkreise, wie beispielsweise zum Heben und Senken des Fahrwerks und für weiter Funktionen, sind hier nicht von Interesse.

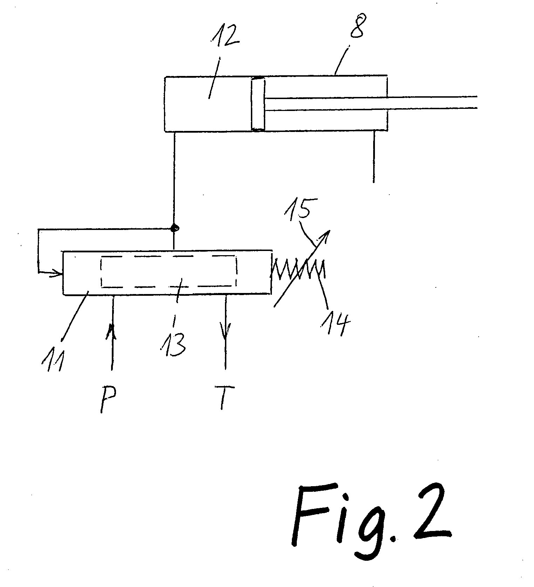

Fig. 2 zeigt eine bevorzugte Ausführungsform der Regeleinrichtung 11. Sie ist nur schematisch dargestellt. Sie weist ein Spindelventil auf, an welches eine von der Hydraulikpumpe P kommende Leitung, eine zum Hydrauliktank T führende Leitung, und eine vom Ventil zur Zylinderkammer 12 der Kolben-Zylinder-Anordnung 8 führende Leitung angeschlossen sind.

Das eine axiale Ende der nur ganz schematisch dargestellten Ventilspindel 13 wird von einer Druckfeder 14 beaufschlagt, die über ein Stellorgan 15 einstellbar ist, um eine bestimmte vorgegebene axiale Druckkraft auf das eine axiale Ende der Ventilspindel 13 auszuüben. Das andere axiale Ende der Ventilspindel 13 wird über den zur Zylinderkammer 12 führenden Leitung herrschenden Druck beaufschlagt, der über eine von dieser Leitung abzweigende Leitung zu dieser Stirnseite der Ventilspindel geführt wird.

Die Ventilspindel 13 nimmt im Ventilgehäuse also stets eine Gleichgewichtsstellung ein, in welcher die Druckfeder 14 die gleiche Axialkraft auf die Ventilspindel ausübt, wie der Hydraulikdruck in der Leitung vom Ventil zur Zylinderkammer 12. Steigt der Druck in der Zylinderkammer 12, weil die Last am Deichselkopf zunimmt, verschiebt dieser die Ventilspindel in Richtung zur Druckfeder 14, die dadurch etwas stärker zusammengedrückt wird. Das Ventil lässt dadurch Hydraulikmittel aus dem Zylinderraum abfließen, bis der Druck wieder seinen Sollwert erreicht, und die Ventilspindel in ihre Normallage zurückkehrt. Nimmt hingegen der Druck im Zylinderraum 12 ab, weil die Last auf den Deichselkopf nachlässt, verschiebt die Feder 14 die Ventilspindel in Richtung von der Feder weg, wodurch das Ventil Hydraulikmittel in den Zylinderraum eintreten lässt, bis der Druck sich dort wieder auf seinen Sollwert erhöht hat, so dass die Ventilspindel wieder in ihre Normallage zurückkehrt.

Die Regelung bewirkt also, dass der die Deichsel 4 abwärts drückende Hydraulikdruck im Zylinderraum 12 der Kolben-Zylinder-Anordnung und damit die Stützlast SL, die vom Deichselkopf auf den Kupplungskopf des Traktors ausgeübt wird, immer im wesentlichen konstant gehalten wird. Ohne eine solche Regelung ist das, wie anhand der Fig. A und B leicht nachvollziehbar ist, nicht der Fall. Denn beim Durchfahren einer Senke steigt der Druck im Zylinderraum durch das nicht mehr ausreichend am Boden abgestützte Gewicht des Geräts an, und die Stützlast SL ebenso, weil das Volumen im Zylinderraum nicht verkleinert werden kann. Ebenso nimmt der Druck im Zylinderraum beim Überfahren einer Kuppe ab, und die Stützlast SL ebenso. Da beim Stand der Technik die Kolben-Zylinder-Anordnung doppelt wirkend betrieben wird, und der Gegendruck auf den Kolben aufrecht erhalten wird, kann sich die Deichsel nicht senken und die Stützlast am Kupplungskopf nimmt ab und kann sogar den Traktor hinten anzuheben suchen.

Bei der erfindungsgemäßen Regelung ist das nicht der Fall. Hier wird der Druck auf die Deichsel und damit die Stützlast SL stets im wesentlichen konstant gehalten. Die Kolben-Zylinder-Anordnung 8 wird dazu einfach wirkend betrieben. Allerdings kann die Hydraulikanlage natürlich so ausgebildet werden, dass die Kolben-Zylinder-Anordnung für bestimmte Handhabungssituationen wahlweise auch doppelt wirkend betrieben werden kann. Damit der Kolben im Zylinder nicht trocken läuft, kann trotzdem auch der vorderhalb des Kolbens befindliche Raum des Zylinders ölgefüllt sein. Für den Regelbetrieb ist dieser dann ständig mit dem Tank verbunden, so dass nach Bedarf Öl herausgedrückt und nachgesaugt werden kann, oder die Kolben-Zylinder-Anordnung kann in eine so genannte Schwimmstellung geschaltet werden.

## Patentansprüche

1. Gezogenes Bodenbearbeitungsgerät mit einem Rahmen (1) und einem daran angeordneten höhenverstellbaren Fahrwerk (2) sowie mit vorderen Stützrädern (3) und einer Deichsel (4) zum Anhängen an einen Traktor, die um eine Querachse schwenkbar am Rahmen angelenkt ist, weiter mit einer Mehrzahl von am Rahmen (1) angeordneten Bodenbearbeitungswerkzeugen wie Grubberzinken (5), Einebnungsorganen (6) und Walzenelementen (7), und mit einer zwischen der Deichsel (4) und dem Rahmen (1) angeordneten hydraulischen Kolben-Zylinder-Anordnung (8), die mit einem Hydraulikdruck beaufschlagbar ist, um eine die Deichsel (4) mit Bezug auf den Rahmen (1) abwärts drückende Kraft auf die Deichsel auszuüben,
**dadurch gekennzeichnet, dass** eine Regeleinrichtung (11) den Hydraulikdruck in der Kolben-Zylinder-Anordnung (8) und damit die von dieser auf die Deichsel (4) ausgeübte Kraft im wesentlichen konstant hält.

2. Bodenbearbeitungsgerät nach Anspruch 1, wobei die Regeleinrichtung (11) ein Steuerventil mit einem Steuerschieber aufweist, das in einer zur Zylinderkammer (12) der Kolben-Zylinder-Anordnung (8) führenden Leitung angeordnet ist, und das in Abhängigkeit von der Stellung des Ventilschiebers (13) die Hydraulikleitung zur Zylinderkammer (12) absperrt, oder mit einer Hydraulikmittelzufuhr (P) oder Hydraulikmittelabfuhr (T) verbindet, und wobei der Ventilschieber (13) an seinem einen Ende mit einem Steuerdruck beaufschlagt wird, und an seinem anderen Ende mit dem in der Hydraulikleitung zur Zylinderkammer (12) herrschenden Druck beaufschlagt wird.

3. Bodenbearbeitungsgerät nach Anspruch 2, wobei das Steuerventil als Spindelventil ausgebildet ist, und der Ventilschieber (14) eine Ventilspindel ist.

4. Bodenbearbeitungsgerät nach Anspruch 2 oder 3, wobei der Steuerdruck durch eine einstellbare Druckfeder (14) erzeugt wird.

5. Bodenbearbeitungsgerät nach Anspruch 2 oder 3, wobei der Steuerdruck von einem hydraulischen oder pneumatischen Steuerdruckgeber erzeugt wird, der als Drucksensor zur Erfassung der Deichselkopf-Stützlast oder der Stützrad-Stützkraft dient oder von einem solchen Drucksensor gesteuert wird.

6. Bodenbearbeitungsgerät nach Anspruch 2 oder 3, wobei der Steuerdruck durch ein elektrisches Organ erzeugt wird, das von einem elektrischen Drucksensor gesteuert wird, der die Deichselkopf-Stützlast oder die Stützrad-Stützkraft erfasst.

7. Bodenbearbeitungsgerät nach Anspruch 2 oder 3, wobei der Steuerdruck in Abhängigkeit von einer mittels Neigungssensoren am Bodenbearbeitungsgerät und am Traktor gemessenen Neigungsdifferenz zwischen Bodenbearbeitungsgerät und Traktor erzeugt wird.

8. Bodenbearbeitungsgerät nach Anspruch 1, wobei die Regeleinrichtung ein die Druckmittelzufuhr und die Druckmittelabfuhr aus der Zylinderkammer (14) der Kolben-Zylinder-Anordnung (8) steuerndes Organ aufweist, dessen Funktion in Abhängigkeit von einer mittels eines Drucksensors gemessenen Deichselkopf-Stützlast oder Stützrad-Stützkraft oder aufgrund einer mittels Neigungssensoren am Bodenbearbeitungsgerät und am Traktor gemessenen Neigungsmitteldifferenz gesteuert wird.
